# EUROPEAN PATENT APPLICATION

(11) **EP 2 333 653 A1**
(43) Date of publication of application: **15.06.2011**
(21) Application number: 09817595.3
(22) Date of filing: 21.08.2009
(51) Int. Cl.: G06F 3/06, G06F 13/10

(54) **INFORMATION BACKUP/RESTORING APPARATUS AND INFORMATION BACKUP/RESTORING SYSTEM**

(30) Priority: 02.10.2008 JP 2008257663
(71) Applicant: Hitachi Solutions, Ltd., Tokyo 140-0002 (JP)
(72) Inventor: KIRIHATA Yasuhiro, Tokyo 140-0002 (JP); GONDOU Kouichi, Tokyo 140-0002 (JP); SAMESHIMA Yoshiki, Tokyo 140-0002 (JP); HASHIMOTO Toru, Tokyo 140-0002 (JP)
(74) Representative: Liesegang, Eva
(86) International application number: PCT/JP2009/064611
(87) International publication number: WO 2010/038558

(57) **Abstract**

To reduce the size of backup data, increase the backup speed, and solve a problem that the amount of unnecessary writing could undesirably increase in a restoration process, which would otherwise require physical disks with a capacity greater than the size of a virtual volume. On a backup server having mounted thereon a virtual volume that is the target to be backed up and restored, read/write access to only the blocks of data areas is performed by a device driver that filters I/O access to a device from a file system on the basis of the data mapping information of the virtual volume, whereby read/write access to unnecessary portions is avoided. Thus, it is possible to reduce the size of backup data, increase the backup speed, and prevent an increase in the amount of unnecessary writing to the virtual volume in a restoration process.

## Description

### Technical Field

The present invention relates to an information backup/restoration processing apparatus, and an information backup/restoration processing system. For example, the invention relates to an apparatus and system for performing backup and restoration processes of a logical volume on an image-by-image basis.

### Background Art

In recent years, digitalization of information within enterprises has been advanced, and the amount of electronic data such as document files, image files, or movie files that are circulated within enterprises is rapidly increasing. Thus, there is a great need for high-capacity storage for storing such a large amount of electronic data among organizations or divisions that store and manage electronic data within the organizations or enterprises, such as a data center or an information system division in enterprises.

Storage products typically have mounted thereon a plurality of physical disks that can be accessed at fast speed and manage them to provide high-capacity storage areas. As a function for storage, there is known a storage virtualization function with which the plurality of physical disks is merged, a plurality of volume areas is logically defined, and the logical volumes are made visible to a host system that is connected to the storage. When such a storage virtualization function is used, it is possible to, even when the total capacity of the physical disks is only 10 GB, logically allocate thereto a logical volume with a capacity of 100 GB and causes the OS on the host system to recognize the volume of 100 GB. Thereafter, when data of a size greater than 10 GB is attempted to be stored in the logical volume of 100 GB, new necessary physical disks are added to the storage, whereby it becomes possible to make the host system be totally unaware of the addition of the new physical disks, and thus to continuously provide services. The cost of storage is related to the number and capacity of the mounted physical disks. However, using the aforementioned storage virtualization function allows low-cost introduction of storage as such a function allows the initial disk capacity to be designed to be lower than that would be required in future and allows the storage capacity to be increased when needed in future.

As data protection for storage, a backup/restoration technique is known. Backup refers to the process of regularly copying data in storage into a different storage medium such as a disk or tape. Restoration refers to the process of returning the backed-up data into the storage. The basic units of backup are classified into the following two kinds: backup on a file-by-file basis and volume backup on an image-by-image basis. However, the backup and restoration processes of a logical volume, which is constructed with the aforementioned storage virtualization scheme, on a image-by-image basis have the following problems.

The first problem is that in the backup process of a volume on an image-by-image basis, a backup application performs a process of sequentially reading data from the first sector to the last sector of the volume. However, the application does not read data of the entire capacity of the actually allocated physical disks but reads the entire data of the logically allocated volume. Thus, data read access to the redundant portions other than the portion that is originally allocated as data could be generated, resulting in a too long backup time.

The second problem is that in the restoration process of a volume on an image-by-image basis, a backup application performs a process of writing backed-up image data to a target virtualized logical volume. However, as the writing in this case is also performed sequentially from the first sector to the last sector of the volume, write access to areas to which physical disks have not conventionally been allocated occurs. Thus, unless physical disks with a capacity that is grater than the capacity of the actually allocated logical volume are prepared, data restoration is impossible.

Further, under a file format such as a NTFS of Windows (Registered Trademark), when a file that has been created once is deleted, for example, a problem would arise that only a file management table is updated, but the content of the actual file data remains as garbage on the disk, so that the physical disk allocated corresponding to the data of the garbage portion of the file in the virtualized volume cannot be freed. Thus, when the virtualized volume is to be backed up and restored, read/write access to such waste data could occur. Thus, such a method is inefficient.

As a technique to solve the aforementioned problems, there is known a method described in Patent Document 1, for example. According to Patent Document 1, an intermediate storage medium is created on the storage side by creating a duplicate of only a storage area actually recorded on a virtual storage medium, and storing such recorded data in the intermediate virtual storage medium into a backup medium. In order to accurately restore the backup data, a block correspondence table, which shows the correspondence between the record addresses of the virtual storage medium and the intermediate storage medium, is created and is stored in the intermediate storage medium. Using such a block correspondence table allows data to be restored to the original virtual storage medium.
Patent Document 1: JP Patent Publication No. 2005-18233

### Disclosure of the Invention

### Problems to be Solved by the Invention

However, the method shown in Patent Document 1 is a storage-system-dependent, closed method within the storage. Thus, it is impossible to identify a disk area being used in accordance with a file format that depends on the OS mounted on the host. Further, as the aforementioned garbage data area that remains after a file is deleted on the NTFS, for example, is also subjected to backup/restoration, such a method is inefficient. Furthermore, there is another problem that since a backup format should be recognized on the storage side in a restoration process, data restoration to different storage would be impossible. However, considering the fact that the purpose of the restoration is not only to restore data against data corruptions but also to protect data against self-destruction of the storage in the event of a disaster, it is desired that data restoration to heterogeneous storage be possible.

The present invention has been made in view of the foregoing circumstances, and provides an apparatus and system that allow efficient backup and restoration of image data in a virtual volume without dependence on the storage system configuration.

### Means for Solving the Problems

In order to solve the aforementioned problems, according to the present invention, a device driver, which filters I/O access to a virtualized volume that is the target to be backed up, is provided on the host system side. The device driver is configured to operate in cooperation with a mounted file system to perform read/write access to only a sector area portion used as a file, whereby read/write access to only a portion, which should be backed up, of the virtualized volume is realized, and thus an efficient backup/restoration mechanism can be provided. In addition, as the data configuration of the virtualized volume in the backup process is not changed at all, and a special, storage-specific backup format is not used, data restoration to heterogeneous storage is possible.

According to another aspect of the present invention, a device driver, which filters I/O access to a virtualized volume that is the target to be backed up, is provided on the host system side, and mapping information of the blocks between the physical disks and the virtualized volume retained within the storage is acquired, whereby read/write access to only the blocks that are actually allocated to the physical disks among the blocks of the virtualized volume is realized, and thus an efficient backup/restoration mechanism is provided. The present system requires that an interface, which can acquire mapping information of the blocks between the physical disks and the virtualized volume, be provided on the storage side. It is possible to restore backup data to heterogeneous storage as long as such an interface is provided in each of the storage that is the source of backup and the storage that is the destination of backup.

That is, the present invention provides an information backup/restoration processing apparatus connected to a storage system that manages as a single logical volume a group of partial storage areas allocated in a distributed manner to a plurality of disk devices, the information backup/restoration processing apparatus being configured to execute backup and restoration processes of the logical volume, and comprising: logical volume configuration information acquisition means for acquiring data configuration information including a block address of significant data in the logical volume; backup means for backing up the significant data corresponding to the block address to storage means; and volume control means for, when the backup means accesses the logical volume, hooking read/write access to the logical volume, reading from the logical volume the significant data corresponding to the block address on the basis of the data configuration information, and providing the read significant data to the backup means.

The logical volume configuration information acquisition means acquires the data configuration information by inquiring of a mounted file system about a file format of the logical volume. Alternatively, the logical volume configuration information acquisition means acquires the data configuration information from a logical volume mapping information storage unit that is included in the storage system.

The volume control means complements a block other than the block having the significant data allocated thereto with a NULL value, and provides to the backup means a backup image composed of the significant data and the NULL value.

in a restoration process, the backup means acquires from the storage means backup data including the significant data, and the volume control means writes only the significant data to a corresponding block of a new logical volume that is initialized with a NULL value. Then, the new logical volume to which the significant data has been successfully written is switched into a normal volume within the storage system.

### Advantages of the Invention

According to the present invention, image data of a virtual volume can be efficiently backed up and restored without dependence on the storage system configuration.

### Brief Description of the Drawings

Fig. 1 is a diagram showing the schematic configuration of an information backup/restoration processing system in accordance with the present invention.
Fig. 2 is a diagram showing the internal configuration of a backup server in accordance with the first embodiment.
Fig. 3 is a diagram showing an exemplary backup image corresponding to the arrangement of data on a virtual volume.
Fig. 4 is a flowchart for illustrating a backup process in accordance with the first embodiment.
Fig. 5 is a flowchart for illustrating a restoration process.
Fig. 6 is a diagram showing the internal configuration of a backup server in accordance with the second embodiment of the present invention.
Fig. 7 is a diagram showing an exemplary table illustrating the virtual volume mapping information.
Fig. 8 is a flowchart for illustrating a backup process in accordance with the second embodiment.

### Description of Symbols

- 101: user terminal
- 102: LAN
- 103: host
- 104,601: backup server
- 105: tape device
- 106: SAN
- 107: storage system
- 108: virtual volume
- 109: secondary volume
- 110: physical disk
- 111: disk pool
- 205: backup application
- 206,602: volume management service
- 207: file system
- 208: volume control driver
- 302: unwritten blocks
- 303: data-allocated blocks
- 304: blocks corresponding to deleted data
- 305: backup image
- 603: virtual volume mapping information
- 701: virtual volume block number
- 702: physical disk identification number
- 703: physical disk block number

### Best Modes for Carrying Out the Invention

The present invention relates to a method for reducing, with a storage virtualization function, the amount of data read from and written to a volume in the image backup and restoration processes of the volume, and thus improving the efficiency of backup and restoration of a virtual volume.

Hereinafter, embodiments of the present invention will be described with reference to the accompanying drawings. It should be noted that the present embodiment is merely illustrative for the purpose of implementing the present invention and is not intended to limit the technical scope of the present invention. Structures that are common throughout the drawings are assigned identical reference numbers.

### 1) First Embodiment

### <Configuration of the Image Backup/Restoration System>

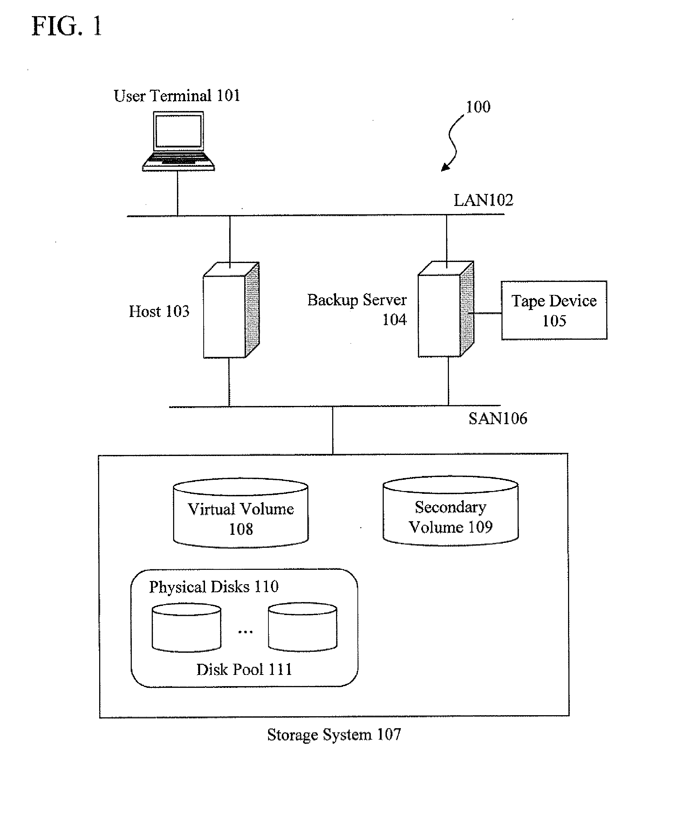

Fig. 1 is a diagram showing the schematic configuration of an image backup/restoration system in accordance with the first embodiment of the present invention. This embodiment will describe a backup method using a typical secondary volume.

An image backup/restoration system 100 includes a user terminal 101, a host computer (hereinafter referred to as a host) 103, a backup server 104, a tape device 105, and a storage system 107. The user terminal 101, the host 103, and the backup server 104 are connected via a LAN 102. The host 103, the backup server 104, and the storage system 107 are connected via a SAN (Storage Area Network). It should be noted that the backup server 104 and the storage system 107 are the central configuration that mainly performs the image backup and restoration processes of a logical volume.

The host 103 is a server system that provides services to the user terminal 101. The backup server 104 is a server system for backing up data in the storage system 107 to the tape device 105.

The storage system 107 includes a disk pool 111 having a plurality of physical disks 110, a virtual volume 108 that is mainly used, and a secondary volume 109 that is a duplicate of the virtual volume 108. Examples of the methods for creating the secondary volume 109 include a method of simply creating a duplicate of the entire volume, and a method of logically creating a duplicate volume by caching only the changed portion in the written data at a given point in time, called snapshot, as needed, and referencing the cache when the written portion is requested to be read or referencing the original volume when portions other than the written portion are requested to be read. However, the present embodiment is not particularly limited to such methods.

Usually, a user accesses the virtual volume 108 mounted on the host 103 from the user terminal 101 via the host 103, and uses data on the virtual volume 108 or stores data in the virtual volume 108. During a backup process, all services that are accessing the virtual volume 108 on the host 103 are stopped, and such services are started again after the secondary volume 109 is created. The thus created secondary volume 109 is accessed from the backup server 104, and data in the secondary volume 109 is copied to the tape device 105.

### <Internal Configuration of the Backup Server>

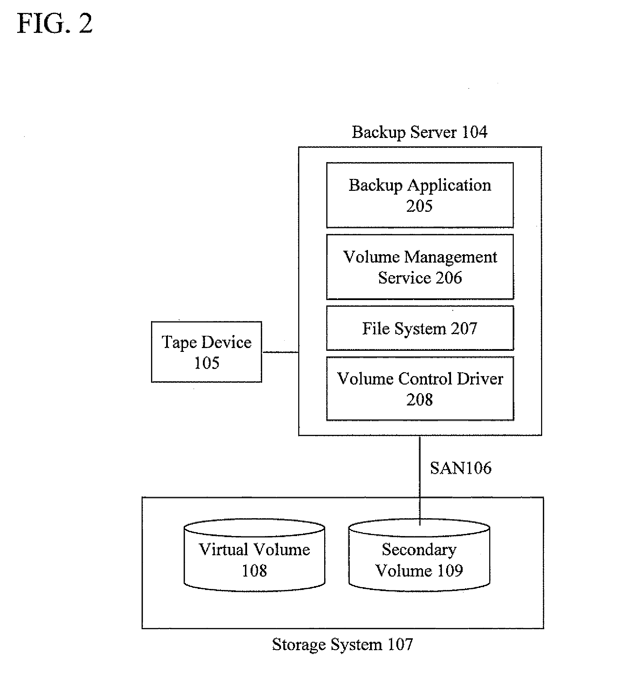

Fig. 2 is a diagram showing the internal configuration of the backup server 104. On the backup server 104, a volume management service 206 and a volume control driver 208 are installed in addition to an existing backup application 205.

The backup application 205 has functions of accessing the secondary volume 109 and sucking data to be backed up. The reason that the secondary volume 109 is accessed is that doing so can eliminate the need to halt the system during a backup process. As the secondary volume 109 is a duplicate of the virtual volume 108 as mentioned earlier, the secondary volume 109 has the same attributes as the virtual volume. Thus, when a system configuration is used in which the virtual volume 108 need not be used during a backup process, it is not necessary to back up data in the secondary volume 109.

The volume control driver 208 is a filter driver located between the file system 207, which is provided by an OS running on the backup server 104, and the secondary volume 109. The volume control driver 208 has functions of hooking read/write access to the secondary volume 109 from the file system 207 and adding its own process. For example, when the OS used is Windows (registered trademark), the volume control driver 208 can be implemented as a host filter driver of a volume class driver, and when the OS used is Unix (registered trademark), the volume control driver 208 can be implemented as a device driver adapted to mount a secondary volume and make it appear as a device file.

The volume management service 206 is a means for executing, when the secondary volume 109 is mounted, a process of inquiring of the file system 207 and acquiring data configuration (address information of only the data that should be backed up (significant data)) on the secondary volume 109. The volume management service 206 informs the volume control driver 208 of the acquired data configuration information, whereby read/write access to the secondary volume 109 is controlled. Herein, the data configuration on the secondary volume 109 is the configuration information that represents which blocks on the secondary volume 109 are occupied by the data blocks of the stored files. Such information is also referred to as bitmap information.

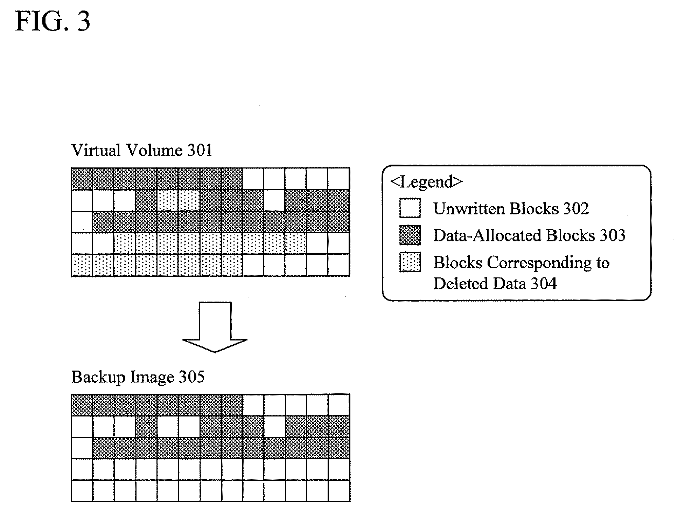

The volume control driver 208 acquires only a valid data portion (significant data) of an image contained in the secondary volume 109 on the basis of the data configuration information informed by the volume management service 206, and complements a block corresponding to the deleted data (so-called garbage data) and an unwritten block (see Fig. 3) with a NULL value, and then sends the read data and the NULL value to the backup application 205.

### configuration Example of the Backup Image>

Fig. 3 is a diagram showing an exemplary backup image corresponding to the arrangement of data on the virtual volume. As shown in Fig. 3, a virtual volume 301 includes unwritten blocks 302, data-allocated blocks 303, and blocks 304 corresponding to the deleted data.

Bitmap information on the file system is the information that manages which blocks on the volume actually correspond to the data-allocated blocks 303. Basically, the data-allocated blocks 303 are the portions that should be backed up.

Thus, in the conventional image backup method, not only the data-allocated blocks 303 but also the blocks 304 corresponding to the deleted data are backed up, whereas the method of the present invention allows an image of only the data-allocated blocks 303 to be backed up as shown in Fig. 3. Specifically, when the virtual volume 301 is read-accessed in a backup process, the volume control driver performs a process of reading only the data-allocated blocks 303 on the basis of the configuration information of the data-allocated blocks 303, and returning NULL values to the blocks 304 corresponding to the deleted data in the same manner as that to the unwritten blocks 302. In a restoration process, only the portion of the data-allocated blocks 303 can be restored. However, since it is only the data-allocated blocks 303 that are basically significant for the file system on the host, accurate restoration is possible.

### <Sequence of the Backup Process>

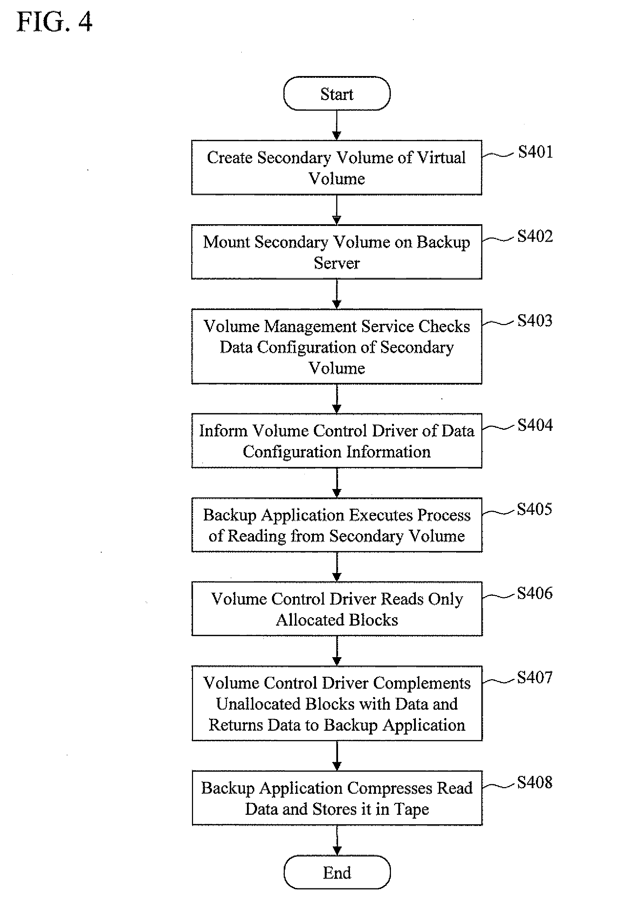

Fig. 4 is a flowchart for illustrating a backup process. When the virtual volume is to be backed up, the storage system 107 first stops the service on the host that is accessing the virtual volume, flushes the write data, verify the data integrity of the virtual volume, and creates the secondary volume 109 that is a duplicate of the virtual volume (step 401.).

Next, the storage system 107 mounts the secondary volume 109 created in step S401 on the backup server 104 so that the backup server 104 can recognize the secondary volume 109 (step S402). When the secondary volume 109 is mounted, the volume management service 206 checks the data configuration of the secondary volume 109 (step S403). Specifically, when the secondary volume 109 is mounted, the volume management service 206 inquires of the file system 207 about bitmap information (data configuration) that represents which blocks are allocated as file data. For example, in the case of the NTFS, bitmap information is stored in a meta information storage file called $Bitmap file.

The volume management service 206 informs the volume control driver of the acquired data configuration information (step S404).

Next, when the backup application 205 initiates an image backup process and executes a process of reading data from the secondary volume 109 (step S405), the volume control driver 208 references the bitmap information informed by the volume management service 206, and executes only read access to the blocks allocated to the file data (step S406). Then, the volume control driver 208 sends to the backup application 205 the read data corresponding to the allocated block portion as it is via the file system 207, and, if there is any read request for an unallocated block, creates a block with NULL data and returns it to the backup application 205 via the file system (step S407).

Finally, the backup application 205 compresses the read image data and stores it in the tape (step S408). Although the compression algorithm used herein is not specifically limited, it is assumed that a compression function retained in the backup application or in the tape device is used.

### <Sequence of the Restoration Process>

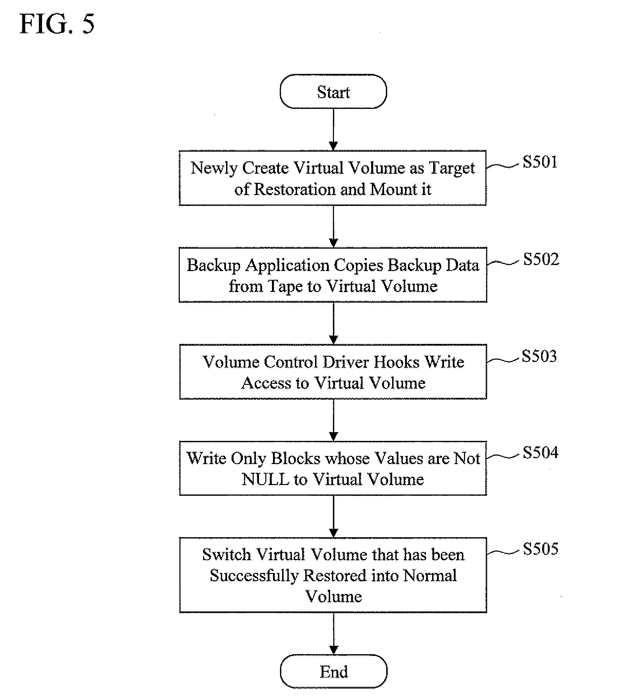

Fig. 5 is a flowchart for illustrating a restoration process. When an image that has been backed up is to be restored to the virtual volume 108, the storage system 107 newly creates therein a virtual volume that is the target of restoration in accordance with an instruction to initiate restoration, and mounts it on the storage system 107 (step S501). The newly created virtual volume herein is constructed as a volume initialized with a NULL value. That is, all data in the virtual volume has a NULL value. This is because, in order to construct the same data as that to be restored as an image, all new volumes should have NULL values.

Next, the backup application 205 copies the backup data from the tape device 105 to the newly created virtual volume (step S502). In this copying process, the volume control driver 208 hooks write access to the virtual volume (step S503), and writes to the virtual volume only the blocks whose values are not NULL (step S504).

Finally, the storage system 107 stops the service on the host that is accessing the virtual volume at the point when the virtual volume has become a normal volume, and switches the virtual volume, to which the backup data has been successfully restored, into a normal volume (step S505).

### 2) Second Embodiment

### configuration of the Image Backup/Restoration System>

The configuration of the image backup/restoration system herein is substantially the same as that in Fig. 1 (the first embodiment), but differs in that it uses a mechanism for providing to an application on the backup server virtual volume mapping information (which exists in the configuration of the first embodiment though not shown in Fig. 1) having stored therein information about the correspondence between each block of the virtual block 108 and the physical disk 110, which is stored in the storage system. Specifically, a method for acquiring the virtual volume mapping information can be realized by managing the virtual volume mapping information in a specific area of the virtual volume 108 in the storage system 107, and causing the application on the backup server to read the specific recorded area.

### internal Configuration of the Backup Server>

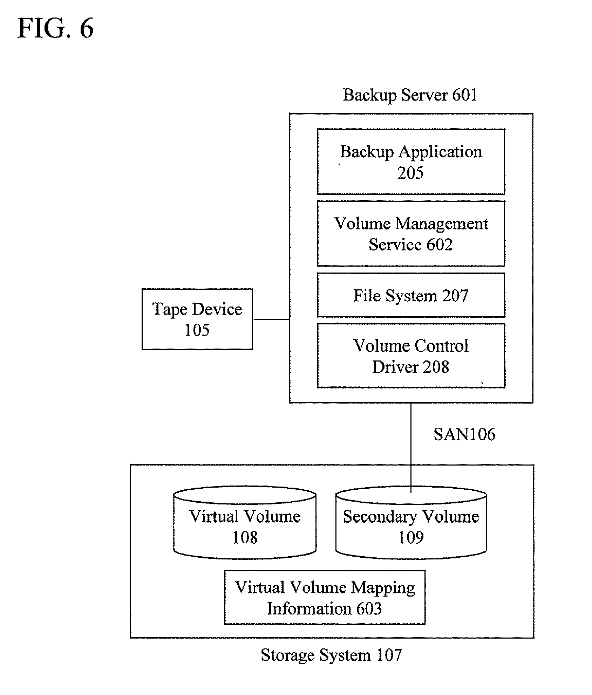

Fig. 6 is a configuration diagram of a backup server 601 in accordance with the second embodiment of the present invention. On the backup server 601, a volume management service 602 and a volume control driver 208 are installed in addition to the existing backup application 205.

The volume control driver 208 is a filter driver located between the file system 207, which is provided by an OS running on the backup server 601, and the secondary volume 109. The volume control driver 208 has functions of hooking read/write access to the secondary volume 109 from the file system 207 and adding its own process.

When the secondary volume 109 is mounted, the volume management service 602 executes a process of inquiring of the storage system 107 and acquiring the virtual volume mapping information (data configuration information) 603. Then, the volume management service 602 informs the volume control driver 208 of the acquired data configuration information. In the aforementioned first embodiment, the volume management service 206 inquires of the file system 207 to acquire the data configuration information. However, in the second embodiment, the volume management service 602 references the virtual volume mapping information 603 to acquire the data configuration information. Referencing the virtual volume mapping information 603 as described above allows the data configuration information to be acquired without dependence on the file system configuration. Meanwhile, unlike in Embodiment 1, there is a possibility that garbage data that has been deleted but cannot be recognized so by the OS may remain in the data configuration. This is because garbage data is, even if it is recognized as being insignificant by the OS, made valid once it is written to the storage system.

The volume control driver 208 controls read/write access to the secondary volume 109 on the basis of the data configuration information.

### <Virtual Volume Mapping Information>

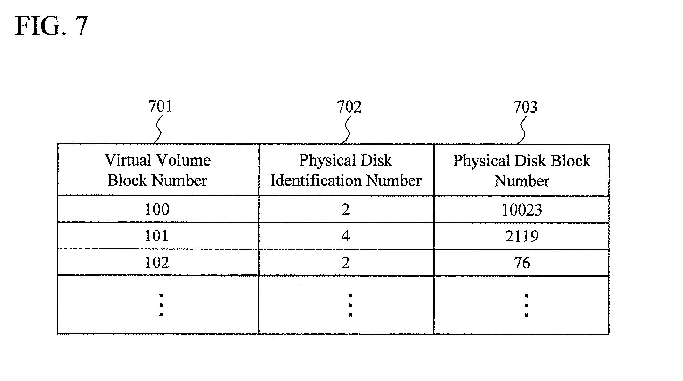

Fig. 7 is a diagram showing an exemplary table illustrating the virtual volume mapping information. This table includes the three following attributes: a virtual volume block number 701, a physical disk identification number 702, and a physical disk block number 703. For example, as shown in the second row of the table, when the value of the virtual volume block number 701 is 101, the value of the physical disk identification number 702 is 4, and the value of the physical disk block number 703 is 2119, it means that a block with a block number 101 in the virtual volume corresponds to the 2119th block with an identification number 4 in a physical disk among a plurality of physical disks in the physical disk pool.

Using such a table, the storage system performs reading/writing by translating the read/write access to a given block of the virtual volume 108 into the block address on the corresponding physical disk 110. All values in the virtual volume block number attribute 701 in the table, which represents the virtual volume mapping information 603, correspond to the block numbers of the virtual volume 108 to which the physical disk blocks are actually allocated.

### <Backup Process>

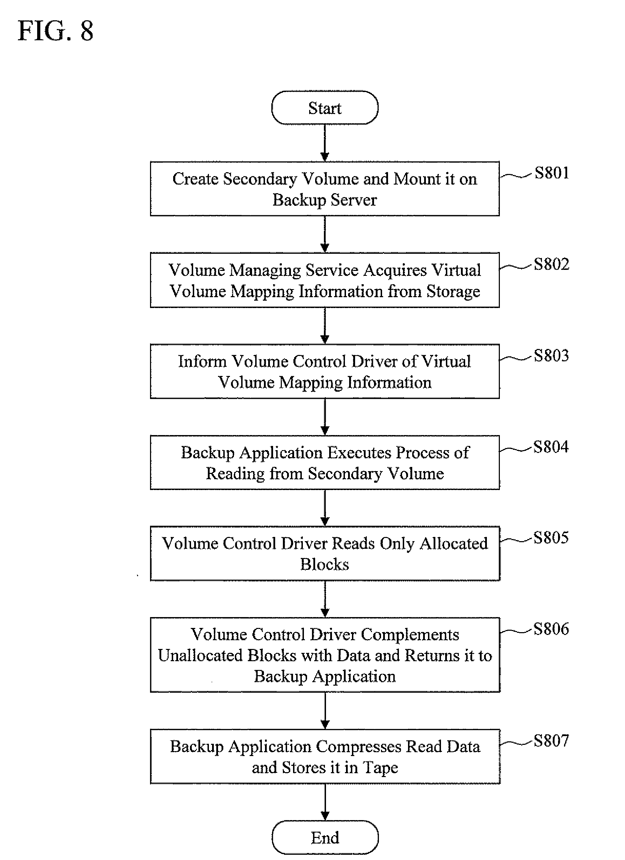

Fig. 8 is a flowchart for illustrating a backup process in accordance with the second embodiment of the present invention. In order to back up the virtual volume, the storage system 107 first stops the service on the host that is accessing the virtual volume, flushes the write data, verify the data integrity of the virtual volume, and creates the secondary volume 109 that is a duplicate of the virtual volume. Then, the storage system 107 mounts the created secondary volume 109 on the backup server 601 so that the backup server 601 can recognize the secondary volume 109 (step S801).

Next, the volume management service 602 acquires the virtual volume mapping information 603 from the storage system 107 (step S802). Then, the volume management service 602 informs the volume control driver 208 of the acquired virtual volume mapping information (step S803).

Thereafter, when the backup application 205 executes a process of reading data from the secondary volume 109 (step S804), the volume control driver 208 reads from the secondary volume 109 only the blocks allocated to the physical disks 110 among the blocks of the virtual volume 108 on the basis of the virtual volume mapping information (data configuration information) (step S805). When an unallocated block is requested to be read, the volume control driver 208 complements such a block with NULL data and returns the data to the backup application 205 via the file system 207 (step S806).

Finally, the backup application 205 compresses the read backup image data and stores it in the tape device 105 (step S807). Although the compression algorithm used herein is not specifically limited, it is assumed that a compression function retained in the backup application 205 or in the tape device 105 is used.

The restoration process is the same as the restoration process in the first embodiment (Fig. 5) of the present invention. Thus, description thereof will be omitted.

### 3) Conclusion

With the configurations described above, it is possible to increase the backup and restoration speeds of a virtual volume and avoid a problem that the amount of written data could undesirably increase in a process of compressing and restoring data while at the same time effectively using the existing backup application.

When data restoration to heterogeneous storage is to be performed, as long as the size of the storage is equal, the overwritten volume can have about the same data configuration as the normal volume that is the source of backup because the backup image data is totally equivalent to the data in the original volume. That is, as the format of the backup data is not dependent on the storage, it is possible to restore data to heterogeneous storage.

According to the present invention, a driver that monitors read/write access to a virtual volume is built. By executing read/write access only to a necessary block portion on demand and thereby minimizing the read and write commands to the storage, it is possible to increase the backup speed, reduce the backup data, and prevent an increase in the amount of unnecessary data writing to the virtual volume in a restoration process.

It should be noted that the present invention can also be realized by a program code of software that implements the functions of the embodiments. In such a case, a storage medium having recorded thereon the program code is provided to a system or an apparatus, and a computer (or a CPU or a MPU) in the system or the apparatus reads the program code stored in the storage medium. In this case, the program code itself read from the storage medium implements the functions of the aforementioned embodiments, and the program code itself and the storage medium having recorded thereon the program code constitute the present invention. As the storage medium for supplying such a program code, for example, a flexible disk, CD-ROM, DVD-ROM, a hard disk, an optical disc, a magneto-optical disc, CD-R, a magnetic tape, a nonvolatile memory card, ROM, or the like is used.

Further, based on an instruction of the program code, an OS (operating system) running on the computer or the like may perform some or all of actual processes, and the functions of the aforementioned embodiments may be implemented by those processes. Furthermore, after the program code read from the storage medium is written to the memory in the computer, the CPU or the like of the computer may, based on the instruction of the program code, perform some or all of the actual processes, and the functions of the aforementioned embodiments may be implemented by those processes.

Moreover, the program code of the software that implements the functions of the embodiments may be distributed via a network, and thereby stored in storage means such as the hard disk or the memory in the system or the apparatus, or the storage medium such as CD-RW or CD-R, and at the point of use, the computer (or the CPU or the MPU) in the system or the apparatus may read the program code stored in the storage means or the storage medium and execute the program code.

## Claims

1. An information backup/restoration processing apparatus connected to a storage system that manages as a single logical volume a group of partial storage areas allocated in a distributed manner to a plurality of disk devices, the information backup/restoration processing apparatus being configured to execute backup and restoration processes of the logical volume, and comprising:
logical volume configuration information acquisition means for acquiring data configuration information including a block address of significant data in the logical volume;
backup means for backing up the significant data corresponding to the block address to storage means; and
volume control means for, when the backup means accesses the logical volume, hooking read/write access to the logical volume, reading from the logical volume the significant data corresponding to the block address on the basis of the data configuration information, and providing the read significant data to the backup means.

2. The information backup/restoration processing apparatus according to claim 1, wherein the logical volume configuration information acquisition means acquires the data configuration information by inquiring of a mounted file system about a file format of the logical volume.

3. The information backup/restoration processing apparatus according to claim 1, wherein the logical volume configuration information acquisition means acquires the data configuration information from a logical volume mapping information storage unit that is included in the storage system.

4. The information backup/restoration processing apparatus according to claim 1, wherein the volume control means complements a block other than the block having the significant data allocated thereto with a NULL value, and provides to the backup means a backup image composed of the significant data and the NULL value.

5. The information, backup/restoration processing apparatus according to claim 1, wherein, in a restoration process,
the backup means acquires from the storage means backup data including the significant data,
the volume control means writes only the significant data to a corresponding block of a new logical volume that is initialized with a NULL value, and
the new logical volume to which the significant data has been successfully written is switched into a normal volume within the storage system.

6. An information backup/restoration processing system comprising:
a storage system configured to manage as a single logical volume a group of partial storage areas allocated in a distributed manner to a plurality of disk devices; and
a backup server connected to the storage system and configured to execute backup and restoration processes of the logical volume, wherein
the storage system includes a first virtual volume corresponding to the logical volume, and creates a secondary volume that is a duplicate of the first virtual volume in a backup process, and
the backup server includes:
volume configuration information acquisition means for acquiring data configuration information including a block address of significant data in the secondary volume;
backup means for backing up the significant data corresponding to the block address to storage means; and
volume control means for, when the backup means accesses the secondary volume, hooking read/write access to the secondary volume, reading from the secondary volume the significant data corresponding to the block address on the basis of the data configuration information, and providing the read significant data to the backup means.

7. The information backup/restoration processing system according to claim 6, wherein the volume configuration information acquisition means acquires the data configuration information by inquiring of a mounted file system about a file format of the secondary volume.

8. The information backup/restoration processing system according to claim 6, wherein the volume configuration information acquisition means acquires the data configuration information from a logical volume mapping information storage unit that is included in the storage system.

9. The information backup/restoration processing system according to claim 6, wherein the volume control means complements a block other than the block having the significant data allocated thereto with a NULL value, and provides to the backup means a backup image composed of the significant data and the NULL value.

10. The information backup/restoration processing system according to claim 6, wherein, in a restoration process,
the storage system creates a second virtual volume that is a new logical volume initialized with a NULL value,
the backup means acquires from the storage means backup data including the significant data,
the volume control means writes only the significant data to a corresponding block of the second virtual volume, and
the storage system is capable of switching the second virtual volume to which the significant data has been successfully written into a normal volume within the storage system.
